# EUROPEAN PATENT SPECIFICATION

(11) **EP 2 017 234 B1**
(45) Date of publication and mention of the grant of the patent: **30.07.2014**
(21) Application number: 08155681.3
(22) Date of filing: 06.05.2008
(51) Int. Cl.: C03B 7/10

(54) **Seal device and linear actuator for a shear mechanism for a machine for forming hollow glass articles provided with said seal device**
Dichtungsvorrichtung und lineare Aktuatoreinheit eines Scheermechanismus einer Maschine zur Herstellung von hohlen Glaswaren mit einer solchen Dichtungsvorrichtung
Dispositif d'étanchéité et actuateur linéaire pour méchanisme de cisaillement d'une machine pour former des articles de verre creux pourvu du-dit dispositif d'étanchéité

(30) Priority: 07.05.2007 IT TO20070309
(43) Date of publication of application: 21.01.2009
(73) Proprietor: Bottero S.p.A., 12100 Cuneo (IT)
(72) Inventor: Viada, Bruno, 12010 Madonna delle Grazie (IT)
(74) Representative: Bergadano, Mirko

(56) References cited:
- EP-A1- 0 490 294
- EP-A2- 0 712 812
- DE-A1- 4 214 286
- US-A- 3 224 817
- US-A- 3 824 900
- US-A- 4 930 403
- US-A- 5 266 093

## Description

The present invention relates to a seal device for separating from one another two environments containing respective fluids and traversed by a rod translating in opposite directions.

In particular, the present invention regards a seal device for a linear actuator for operating a shearing member of a parallel shear mechanism used in a machine for forming glassware, to which the ensuing treatment will make explicit reference without this implying any loss of generality.

In the field of forming of glass articles it is known to use glassware-forming machines, commonly known as I.S. (Individual Sections) forming machines, which comprise an assembly for forming a strand of molten glass and a shearing device, commonly known as "parallel shears", for shearing the strand transversely and producing a succession of gobs of glass. For this purpose, the shearing device comprises two shearing members that substantially face one another and are mobile in opposite directions orthogonal to the direction of advance of the strand of molten glass between a retracted position of rest, in which they enable advance between them of the strand and are impinged upon by a jet of coolant, and an advanced position of shearing, in which they cut the strand transversely to create the succession of gobs of glass. Each shearing member is mobile between the aforesaid positions under the thrust of a respective linear actuator, comprising an outer casing for housing an actuating assembly operating in a lubricated environment, generally by means of oil, a translating rod for supporting the corresponding shearing member, and a fluid-seal device set between the rod and the casing.

EP 0 490 294 A1 and EP 0 712 812 A2 disclose linear actuator for a shear mechanism for an I.S. machine.

Seal devices currently used comprise a gasket set up against the casing, i.e., on the lubricant side for withholding the lubricant within the casing, and a scraper set on the coolant side for removing from the side surface of the rod water and impurities during displacement of the rod itself towards its retracted position.

Both the gasket and the scraper are made of special materials that are able to operate in the presence of high temperatures but, above all, are chosen so as to withstand particularly high frequencies of displacement, normally in the region of 240 oscillations per minute or higher imposed by current rates of production of glassware-forming machines.

Albeit used, known seal devices of the type described above are, however, far from satisfactory, above all because they reach a limit condition of wear in relatively short periods of time. Specifically, the operative life of the gasket is sensibly reduced on account of the incompatibility with some chemical elements present in the coolant and of the corresponding physical conditions of use and, consequently, both the gasket and the scraper must be subjected to continuous and periodic maintenance operations that considerably increase the already high production costs, but, above all, the reliability of the shearing device, imposing frequent and unacceptable machine-down times. Following upon wear, a part of the coolant and of the contaminating substances contained therein remain in contact with the rod during re-entry or return of the rod itself into its retracted position, and through the scraper and the gasket they come into contact with the lubricant, changing the characteristics thereof and progressively damaging the components in relative motion within the casing. Simultaneously, the lubricant remains, by passing beyond the gasket in the form of a film, in contact with the rod during the movement outwards or the movement into the advanced position. Part of this fluid is then withheld by the scraper on the outside of the casing during the movement of re-entry. This triggers a "pump" effect, which, on account of the high working frequencies, causes a rapid emptying of the oil bath contained within the casing with consequent damage to the lubricated components. The aforesaid effect is then accentuated by the rapid wear of the sealing elements.

The aim of the present invention is to provide a fluid-seal device that will enable a simple and inexpensive solution to the problems set forth above and, in particular, a device that will enable the problems set forth above to be prevented also when working at high operating frequencies.

According to the present invention, a seal device is provided as claimed in Claim 1 as well as a linear actuator as claimed in claim 6.

The invention will now be described with reference to the annexed drawings, which illustrate a non-limiting example of embodiment thereof and in which:
Figure 1 is a schematic illustration in side elevation of a machine for forming glassware comprising a shear mechanism provided with a linear actuator made according to the teachings of the present invention;
Figure 2 is a view according to the arrows II-II of Figure 1; and
Figure 3 is a cross section at a markedly enlarged scale according to the line III-III of Figure 2.

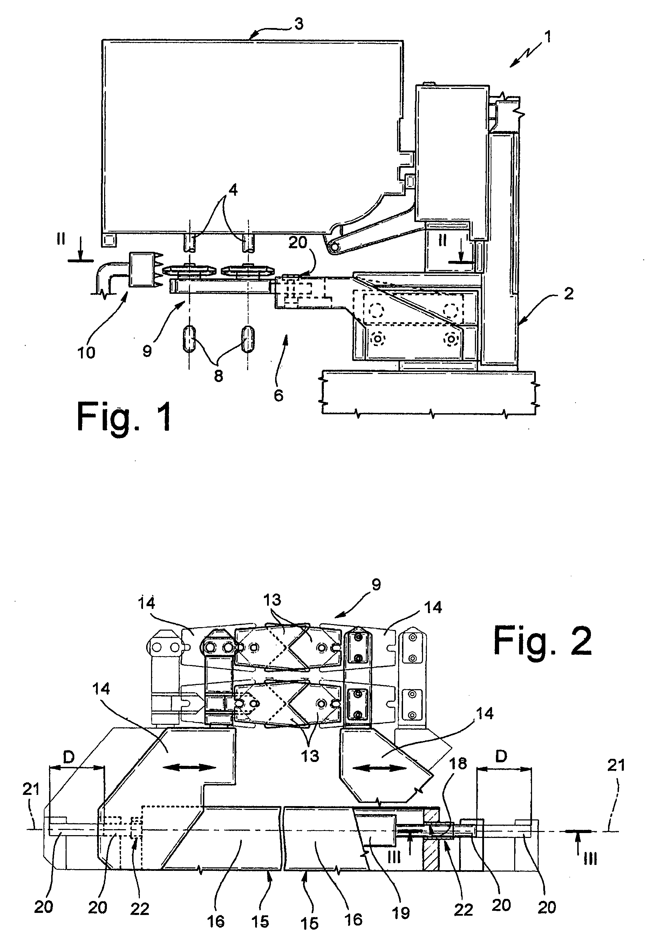

In Figure 1, designated as a whole by 1 is a machine for forming glassware (not illustrated) commonly known as I.S. machine. The machine 1 comprises a frame 2, which supports an extrusion assembly 3 for forming one or more strands 4 of molten glass, and a shear mechanism 6 for shearing the strands 4 transversely and producing a plurality of gobs 8 of molten glass.

The shear mechanism 6, which is coupled to the frame 2 in an adjustable way in the vertical direction, comprises a shearing device 9 with parallel shears, and a dispenser device 10 (illustrated schematically) for dispensing a lubricant/coolant, normally a mixture of water and oil or only water, on the shearing device 9.

The shearing device 9 comprises two pairs of shearing members 13 set substantially facing one another; the shearing members 13 of each pair of members are carried by respective supports 14 coupled to respective linear actuators, designated by 15, and designed to displace the corresponding supports 14 and shearing members 13 between two end-stroke positions set at a given distance D and of which an advanced shearing position, illustrated with a solid line in Figure 2, in which the members 13 themselves cut the strand 4 transversely to form the corresponding gobs 8 of glass, and one set at a distance, illustrated with a dashed line once again in Figure 2, in which the members 13 enable advance of the strands 4.

Each linear actuator 15 comprises an outer casing 16 fixed to the base 2 and provided with an outlet opening 18, an actuation assembly 19, which is lubricated conveniently with oil located within the casing 16, and an actuation rod 20. The rod 20 comprises a terminal portion connected to the corresponding support 14, and an opposite terminal portion connected to the actuation assembly 19 designed to displace the rod 20 itself together with the members 13 in opposite directions in a longitudinal direction 21 and between the aforesaid end-stroke positions at a frequency of oscillation that can reach a value of 240 oscillations per minute or more.

Set between each of the rods 20 and the respective casing 16 at the corresponding outlet 18 is a respective seal device 22 for isolating the internal chamber of the actuator in which there is the aforesaid lubricant from the outer environment, in which the fluid for lubrication/cooling of the shearing members 13 delivered by device 10 is present.

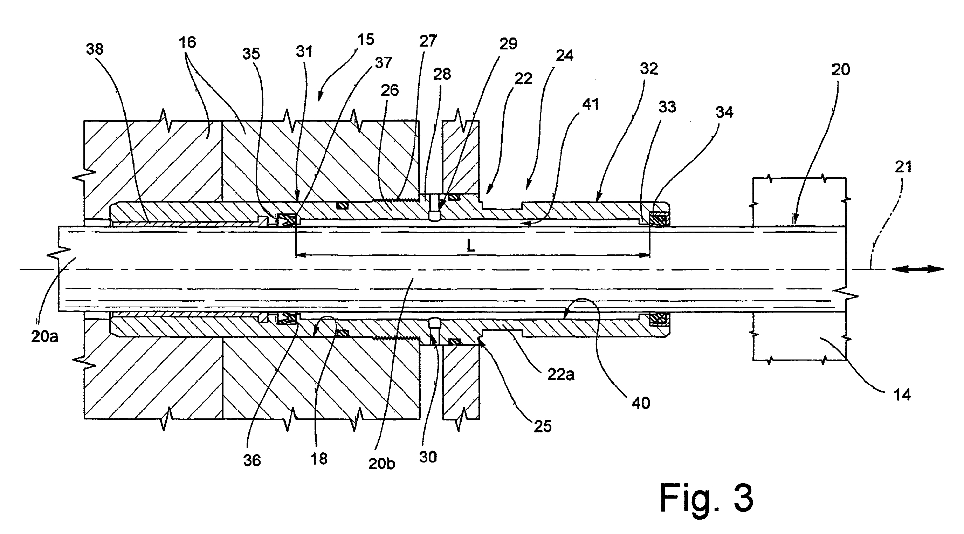

According to what is illustrated in particular in Figure 3, each seal device 22 comprises a tubular body 24 coaxial to the corresponding rod 20 and traversed with a degree of play by the corresponding rod 20 itself. The tubular body 24 comprises an intermediate portion 25, which, in turn, comprises an externally threaded stretch 26 screwed in a threaded stretch 27 of the corresponding opening 18, and an outer flange 28 set bearing upon the casing 16 itself for setting the tubular body 24 in a fixed and pre-set axial position with respect to the casing 16. Made on the flange 28 is a ring 29 of radial through holes 30 for communication between the space inside the tubular body 24 and the outside world in order to drain off any possible fluids that could deposit in the chamber 41.

Once again with reference to Figure 3, the tubular body 24 further comprises two side portions 31 and 32 extending in opposite directions from the intermediate portion 25 through the opening 18 and, respectively, in cantilever fashion on the outside of the casing 16.

The portion 32 comprises an end internal annular flange 33, set against which is a gasket 34 sliding on the corresponding rod 20, whilst the portion 31 comprises an intermediate internal radial flange 35 provided with a recess 36, housed in which is a gasket 37 with sliding lips in contact with the rod 20 and conveniently made, at least in part, of fluoroelastomeric material. The portion 31 then houses a bushing 38 for guiding the rod 20, which extends between the flange 35 and the free end of the portion 31 itself.

With reference to Figure 3, the flanges 33 and 35 have an internal diameter smaller than that of the remaining part of the tubular body 24 and delimit, together with an intermediate portion 22a of the tubular body 24 itself, a cylindrical recess 40. The recess 40 defines, together with the corresponding rod 20 and with the gaskets 34 and 37, an elongated annular chamber 41, which communicates with the outside world through the ring 29 of holes 30 and has a length L measured parallel to the direction 21 or to the rod 20 equal to or conveniently greater than the distance D between the aforesaid end positions of the shearing members 13.

In this way, during displacement of the corresponding rod 20 from the retracted position towards the advanced position, the intermediate stretch 20a of the rod 20, which in the retracted position is housed within the casing 16 and is thus surrounded by a lubricant groove, never passes beyond the gasket 34, i.e., it remains always within the chamber 41. Likewise, during the displacement of the rod 20 from the advanced position towards the retracted position, the stretch 20b of the rod 20 set on the outside of the tubular body 22 and thus impinged upon by the lubricant/coolant and by the contaminating agents present in the fluid itself, never passes beyond the gasket 35, i.e., it remains at the most always housed within the chamber 41.

It follows from the above that the fact of setting the gaskets 34 and 37 at a distance from one another and of providing between the gaskets 34 and 37 themselves an elongated chamber having a longitudinal extension equal to or greater than the maximum travel of the rod 20 enables permanent isolation of the lubricant present in the casing 16 from the lubricant/coolant present in the external shearing environment. In fact, as regards the terminal part 20b of the rod 20, which can effectively convey the lubricant/coolant and the contaminants present therein there is prevented access to the casing 16, whilst the part of the rod 20 that comes out of and then goes back into the casing 16 itself is prevented from coming into contact with the lubricant/coolant itself.

The fact of providing an intermediate insulation chamber, such as the chamber 42, enables choice of the gasket on the lubricant side, i.e., the gasket 37, from the family of gaskets suited for operation at high frequencies of oscillation but with common characteristics of resistance to aqueous fluids, which, precisely for this reason, were altogether unable to find application in the known solutions. The latter gaskets, amongst which those made of fluoroelastomeric material are preferable, in addition to ensuring efficiency, functional reliability, and service life comparable with those of the gaskets normally used, have a decidedly more contained cost.

From the foregoing description, it emerges clearly that modifications and variations can be made to the actuators and to the device 22 described herein, without thereby departing from the sphere of protection defined by the claims. In particular, the actuators 15 could be constructionally different from the ones indicated and comprise, for example, a number of rods different from the one indicated, just as also the gaskets 34 and 37 could be different as regards type and material.

From the foregoing description it is evident that the internal diameter of the tubular body 24 could approximate by excess the external diameter of the rod 20 so that the annular chamber 42 would have a radial dimension or thickness comparable with that of a fluid groove.

## Claims

1. A seal device (22) for separating from one another two environments containing respective fluids and traversed by a rod (20) translating in opposite directions in a longitudinal direction (21) between two end-stroke positions set at a distance (D) apart from one another; the device (22) comprising: a fixed supporting tubular body (24) set between said two environments and traversed by said translating rod (20); first sealing means (37) comprising gasket with sliding lips in contact with the rod (20) and set between said supporting body and one of said environments; and second sealing means (34) comprising gasket sliding on the rod and set between said supporting body and the other of said environments, said seal device being **characterized in that** said first and second sealing means are set at a distance (L) from one another measured parallel to said longitudinal direction at least equal to the distance (D) between said end-stroke positions.

2. The seal device according to Claim 1, **characterized in that** it comprises an elongated cavity (40) that delimits with said rod an elongated chamber (41) made between said first and second sealing means; said elongated chamber (41) having a length equal to or greater than the distance between said end-stroke positions.

3. The seal device according to Claim 1 or Claim 2, **characterized in that** said elongated chamber (41) communicates with the outside world through at least one discharge opening (30).

4. The seal device according to Claim 2 or Claim 3, **characterized in that** said tubular supporting body comprises a first internal resting annular shoulder (36) and a second internal resting annular shoulder (33) for said first sealing means (37) and second sealing means (34), respectively; said shoulders having respective internal diameters smaller than an internal diameter of said cavity.

5. The seal device according to any one of the preceding claims, **characterized in that** said first sealing means (37) comprise a gasket at least partially made of fluoroelastomeric material.

6. A linear actuator (15) comprising: an outer casing (16) having at least one opening (18) for communication 10 between the space inside the outer casing (16) and the outside world; motor-driven actuator means (19) and a lubricant housed in said outer casing (16); a rod (20) extending through said opening (18) and translating in opposite directions in a longitudinal direction (21) between two end-stroke positions set at a distance (D) from one another; a fixed tubular body (24) associated to said opening and traversed by said translating rod (20); first sealing means (37) ) comprising gasket with sliding lips in contact with the rod (20) and set between said supporting body and said rod for withholding the lubricant within the casing (16); and second sealing means (34) comprising gasket sliding on the rod and set between said supporting body and said rod for preventing inlet of external contaminating fluids into said casing, said linear actuator being **characterized in that** said first and second sealing means are set at a distance (L) from one another measured parallel to said longitudinal direction at least equal to the distance (D) between said end-stroke positions.

7. The linear actuator according to Claim 6, **characterized in that** said tubular body and said rod delimit between them an elongated chamber (41) made between said first and second sealing means; said elongated chamber having a length (L) equal to or greater than the distance between said end-stroke positions.

8. The actuator according to Claim 7, **characterized in that** said elongated chamber communicates with the outside world through at least one discharge opening (30).

9. The actuator according to Claim 8, **characterized in that** said discharge opening is defined by a ring of radial holes.

10. The actuator according to any one of Claims 6 to 9, **characterized in that** said tubular supporting body comprises a first internal resting annular shoulder and a second internal resting annular shoulder, respectively, for said first and second sealing means; said shoulders having respective internal diameters smaller than an internal diameter of said cavity.

11. The actuator according to any one of Claims 6 to 10, **characterized in that** said first sealing means (37) comprise a gasket at least partially made of fluoroelastomeric material.

12. A machine (1) for forming glass articles, comprising extruding means (3) for forming at least one continuous strand (4) of glass, and shearing means (6) for shearing said strand of glass transversely and forming a succession of gobs (8) of glass; said shearing means (6) comprising at least one pair of shearing members (13) and for each said shearing member a linear actuator (15) made according to any one of Claims 6 to 11.

13. Use of a linear actuator (15) according to any one of Claims 6 to 11 in a shear mechanism for shearing a strand of molten glass of a machine for the production of glassware.

## Patentansprüche

1. Dichtungsvorrichtung (22) zum Separieren zweier Umgebungen, die jeweilige Fluide aufweisen, voneinander, wobei sich durch die Dichtungsvorrichtung eine Stange (20) erstreckt, die sich in entgegengesetzte Richtungen in Längsrichtung (21) zwischen zwei Hubendpositionen, die in einem Abstand (D) voneinander angeordnet sind, hin und her bewegt; wobei die Vorrichtung (22) aufweist:
einen stationären rohrförmigen Trägerkörper (24), der zwischen den zwei Umgebungen angeordnet ist und durch den sich die hin und her bewegende Stange (20) erstreckt;
zwischen dem Trägerkörper und einer der Umgebungen angeordnete erste Dichtungsmittel (37) mit einer Dichtung mit gleitenden Lippen in Kontakt mit der Stange (20); und
zwischen dem Trägerkörper und der anderen der Umgebungen angeordnete zweite Dichtungsmittel (34) mit einer an der Stange gleitenden Dichtung,
wobei die Dichtungsvorrichtung **dadurch gekennzeichnet ist, dass** die ersten und zweiten Dichtungsmittel in einem Abstand (L), gemessen parallel zur Längsrichtung, voneinander angeordnet sind, der mindestens gleich dem Abstand (D) zwischen den Hubendpositionen ist.

2. Dichtungsvorrichtung nach Anspruch 1, **dadurch gekennzeichnet, dass** sie einen länglichen Hohlraum (40) aufweist, der gemeinsam mit der Stange eine zwischen den ersten und zweiten Dichtungsmitteln gebildete längliche Kammer (41) begrenzt; wobei die längliche Kammer (41) eine Länge hat, die gleich oder größer ist als der Abstand zwischen den Hubendpositionen.

3. Dichtungsvorrichtung nach Anspruch 1 oder 2, **dadurch gekennzeichnet, dass** die längliche Kammer (41) mit der äußeren Umgebung über mindestens eine Auslassöffnung (30) in Verbindung steht.

4. Dichtungsvorrichtung nach Anspruch 2 oder 3, **dadurch gekennzeichnet, dass** der rohrförmige Trägerkörper eine erste innere ringförmige Auflageschulter (36) und eine zweite innere ringförmige Auflageschulter (33) für die ersten Dichtungsmittel (37) bzw. zweiten Dichtungsmittel (34) aufweist; wobei die Schultern jeweilige Innendurchmesser haben, die kleiner sind als ein Innendurchmesser des Hohlraums.

5. Dichtungsvorrichtung nach einem der vorstehenden Ansprüche, **dadurch gekennzeichnet, dass** die ersten Dichtungsmittel (37) eine Dichtung aufweisen, die zumindest teilweise aus einem fluoroelastomeren Material hergestellt ist.

6. Linearer Aktuator (15), der aufweist:
ein Außengehäuse (16) mit mindestens einer Öffnung (18) für eine Verbindung zwischen dem Raum innerhalb des Gehäuses (16) und der äußeren Umgebung;
motorisch angetriebene Aktuatoreinrichtungen (19) und ein in dem Außengehäuse (16) aufgenommenes Schmiermittel;
eine Stange (20), die sich durch die Öffnung (18) erstreckt und sich in entgegengesetzte Richtungen in Längsrichtung (21) zwischen zwei Hubendpositionen, die in einem Abstand (D) voneinander angeordnet sind, hin und her bewegt;
einen stationären rohrförmigen Körper (24), der mit der Öffnung verbunden ist und durch den sich die Stange (20) erstreckt;
zwischen dem Trägerkörper und der Stange angeordnete erste Dichtungsmittel (37) mit einer Dichtung mit gleitenden Lippen in Kontakt mit der Stange (20), um das Schmiermittel innerhalb des Gehäuses (16) zurückzuhalten; und
zwischen dem Trägerkörper und der Stange angeordnete zweite Dichtungsmittel (34) mit einer an der Stange gleitenden Dichtung, um einen Eintritt von externen kontaminierenden Fluiden in das Gehäuse zu verhindern;
wobei der lineare Aktuator **dadurch gekennzeichnet ist, dass** die ersten und zweiten Dichtungsmittel in einem Abstand (L), gemessen parallel zur Längsrichtung, voneinander angeordnet sind, der mindestens gleich dem Abstand (D) zwischen den Hubendpositionen ist.

7. Linearer Aktuator nach Anspruch 6, **dadurch gekennzeichnet, dass** der rohrförmige Körper und die Stange zwischen sich eine zwischen den ersten und zweiten Dichtungsmitteln gebildete längliche Kammer (41) begrenzen; wobei die längliche Kammer (41) eine Länge hat, die gleich oder größer ist als der Abstand zwischen den Hubendpositionen.

8. Aktuator nach Anspruch 7, **dadurch gekennzeichnet, dass** die längliche Kammer (41) über mindestens eine Auslassöffnung (30) mit der äußeren Umgebung in Verbindung steht.

9. Aktuator nach Anspruch 8, **dadurch gekennzeichnet, dass** die Auslassöffnung aus einem Ring radialer Löcher gebildet ist.

10. Aktuator nach einem der Ansprüche 6 bis 9, **dadurch gekennzeichnet, dass** der rohrförmige Trägerkörper eine erste innere ringförmige Auflageschulter und eine zweite innere ringförmige Auflageschulter für die ersten Dichtungsmittel bzw. zweiten Dichtungsmittel aufweist; wobei die Schultern jeweilige Innendurchmesser haben, die kleiner sind als ein Innendurchmesser des Hohlraums.

11. Aktuator nach einem der Ansprüche 6 bis 10, **dadurch gekennzeichnet, dass** die ersten Dichtungsmittel (37) eine Dichtung aufweisen, die zumindest teilweise aus einem fluoroelastomeren Material hergestellt ist.

12. Maschine zur Herstellung von Glaswaren, wobei die Maschine aufweist: Extrudereinrichtungen (3) zum Formen mindestens eines kontinuierlichen Glasstrangs (4) und Schereinrichtungen (6) zum transversalen Scheren des Glasstrangs und Formen einer Folge von Glasklumpen (8); wobei die Schereinrichtungen (6) mindestens ein Paar Scherelemente (13) und für jedes Scherelement einen nach einem der Ansprüche 6 bis 11 hergestellten linearen Aktuator (15) aufweist.

13. Verwendung eines linearen Aktuators (15) nach einem der Ansprüche 6 bis 11 in einem Schermechanismus zum Scheren eines Strangs aus geschmolzenem Glas, wobei der Schermechanismus in einer Maschine zur Herstellung von Glaswaren angeordnet ist.

## Revendications

1. Dispositif d'étanchéité (2) pour séparer l'un par rapport à l'autre deux espaces contenant des fluides respectifs et traversés par une tige (20) se déplaçant dans des directions opposées selon une direction longitudinale (21) entre deux positions de fin de course fixées à une distance (D) qui les sépare ; le dispositif (22) comportant : un corps tubulaire de support fixe (24) disposé entre les deux espaces et traversé par ladite tige mobile en translation (20) ; des premiers moyens de scellement (37) comportant un joint avec des lèvres coulissantes sur la tige (20), disposés entre ledit corps de support et un desdits espaces ; et des seconds moyens de scellement (34) comportant un joint glissant sur la tige, disposés entre ledit corps de support et l'autre desdits espaces, ledit dispositif d'étanchéité étant **caractérisé en ce que** lesdits premiers et lesdits seconds moyens de scellement sont disposés à une distance (L) les uns des autres, mesurée parallèlement à ladite direction longitudinale, au moins égale à la distance (D) entre lesdites positions de fin de course.

2. Dispositif d'étanchéité selon la revendication 1, **caractérisé en ce qu'**il comprend une cavité allongée (40) qui délimite, avec ladite tige, une chambre allongée (41) constituée entre lesdits premiers et lesdits seconds moyens de scellement ; ladite chambre allongée (41) ayant une longueur égale ou supérieure à la distance entre les positions de fin de course.

3. Dispositif d'étanchéité selon la revendication 1 ou la revendication 2, **caractérisé en ce que** ladite chambre allongée (41) communique avec le monde extérieur à travers au moins une ouverture d'évacuation (30).

4. Dispositif d'étanchéité selon la revendication 2 ou la revendication 3, **caractérisé en ce que** ledit corps tubulaire de support comporte un premier épaulement d'appui annulaire interne (36) et un second épaulement d'appui annulaire interne (33), respectivement pour lesdits premiers moyens de scellement (37) et lesdits seconds moyens de scellement (34) ; lesdits épaulements ayant des diamètres intérieurs respectifs plus petits que le diamètre intérieur de ladite cavité.

5. Dispositif d'étanchéité selon l'une quelconque des revendications précédentes, **caractérisé en ce que** lesdits premiers moyens de scellement (37) comportent un joint réalisé au moins partiellement en un matériau fluoroélastomère.

6. Actuateur linéaire (15) comportant : un caisson extérieur (16) comprenant au moins une ouverture (18) pour assurer la communication entre l'espace intérieur du caisson (16) et le monde extérieur ; des moyens d'activation (19) motorisés et un lubrifiant logé dans ledit caisson extérieur (13) ; une tige (20) qui s'étend à travers l'ouverture (18) et se déplace en translation dans des directions opposées selon une direction longitudinale (21) entre deux positions de fin de course fixées à une distance (D) qui les sépare ; un corps tubulaire fixe (24) associé à ladite ouverture et traversé par ladite tige (20) mobile en translation ; des premiers moyens de scellement (37) comportant un joint avec des lèvres en contact avec la tige, disposés entre ledit corps de support et ladite tige pour maintenir le lubrifiant à l'intérieur du caisson (16) ; et lesdits seconds moyens de scellement (34) comportant un joint coulissant sur la tige entre ledit corps de support et ladite tige pour préserver l'intérieur d'une contamination par des fluides extérieurs dans ledit caisson ; ledit actuateur linéaire étant **caractérisé en ce que** lesdits premiers et seconds moyens de scellement sont disposés à une distance (L) les uns des autres, mesurée parallèlement à ladite direction longitudinale, au moins égale à la distance (D) entre lesdites positions de fin de course.

7. Actuateur linéaire selon la revendication 6, **caractérisé en ce que** ledit corps tubulaire et ladite tige délimitent entre eux une chambre allongée (41) constituée entre lesdits premiers et lesdits seconds moyens de scellement ; ladite chambre allongée (41) ayant une longueur (L) égale ou supérieure à la distance entre les positions de fin de course.

8. Actuateur linéaire selon la revendication 7, **caractérisé en ce que** ladite chambre allongée communique avec le monde extérieur à travers au moins une ouverture d'évacuation (30).

9. Actuateur linéaire selon la revendication 8, **caractérisé en ce que** ladite ouverture d'évacuation est définie par une bague d'une ouverture radiale.

10. Actuateur linéaire selon l'une quelconque des revendications 6 à 9, **caractérisé en ce que** ledit corps tubulaire de support comporte un épaulement d'appui annulaire interne et un second épaulement d'appui annulaire interne, respectivement pour lesdits premiers et lesdits seconds moyens de scellement; lesdits épaulements ayant des diamètres intérieurs respectifs plus petits que le diamètre intérieur de ladite cavité.

11. Actuateur linéaire selon l'une quelconque des revendications 6 à 10, **caractérisé en ce que** lesdits premiers moyens de scellement (37) comportent un joint réalisé au moins partiellement en un matériau fluoroélastomère.

12. Machine (1) pour produire des articles en verre, comportant des moyens d'extrusion (3) pour réaliser au moins une chaîne continue (4) de verre et des moyens de séparation (6) pour séparer ladite chaîne de verre transversalement et former une suite de produits creux (8) en verre ; lesdits moyens de séparation (6) comportant au moins une paire d'éléments diviseurs (13) et, pour chacun de ces éléments diviseurs, un actuateur linéaire (15) réalisé selon l'une quelconque des revendication 6 à 11.

13. Utilisation d'un actuateur linéaire (15) selon l'une quelconque des revendications 6 à 11 dans un mécanisme de séparation d'une chaîne de verre moulé d'une machine de production d'articles en verre.
